# EUROPEAN PATENT SPECIFICATION

(11) **EP 3 676 351 B1**
(45) Date of publication and mention of the grant of the patent: **19.03.2025**
(21) Application number: 18788826.8
(22) Date of filing: 09.10.2018
(51) Int. Cl.: C09K 21/02, C09K 21/14, C09K 3/10, C08L 83/04, E04B 1/94, C08K 3/013, C08K 3/016

(54) **METHOD OF SEALING A SERVICE PENETRATION**
VERFAHREN ZUM ABDICHTEN EINER SERVICEDURCHFÜHRUNG
PROCÉDÉ DE SCELLEMENT D'UNE PÉNÉTRATION DE SERVICE

(30) Priority: 10.10.2017 GB 201716599
(43) Date of publication of application: 08.07.2020
(73) Proprietor: POLYSEAM LIMITED, Huddersfield HD1 6SB (GB)
(72) Inventor: HLUCHAN, Wolodymyr, Huddersfield HD1 6SB (GB); BOGSTAD, Kjetil, Huddersfield HD1 6SB (GB)
(74) Representative: Appleyard Lees IP LLP
(86) International application number: PCT/GB2018/052877
(87) International publication number: WO 2019/073213

(56) References cited:
- WO-A1-94/11455

## Description

The present invention relates to methods of sealing a service penetration using fire retardant sealant compositions.

When services (typically pipes and wires) are fitted in a fire stopping structure, for example a wall, floor or ceiling, the penetration of the structure can cause a break in a fire barrier. This reduces the fire resistance of the structure. It is therefore standard practice to fit a fire retardant sealant around the service penetration to reinstate the fire resistance of the structure.

There are a number of problems with existing penetration sealant systems. When fitting a service through a fire stop structure, it is common practice to make a hole in the structure that is larger than is needed for the service to fit through. The hole is then filled with the sealant once the service has been fitted. This can cause a number of difficulties.

In some instances it can be difficult to deliver the sealant within the hole. If there is an internal gap in the structure, for example in the case of cavity wall, the sealant may fall through the gap. The provision of a hole having a greater diameter than the service is also undesirable as this introduces a larger than necessary break in the fire barrier and reduces the fire resistance rating of the structure as a whole.

One common practice is to use a surface mounted fire collar which holds the sealant in place. Such fire collars typically comprise a cage structure around the service penetration which holds a fire stop sealant in place. This is both unsightly and costly. These fire collars need to be fitted with fastenings which can cause damage to a surface of the structure, for example a wall.

When services need to be repaired or replaced the sealant has to be removed. Most sealants currently available set and harden and as a result can be difficult to remove without damaging the surrounding structure.

It is an aim of the present invention to provide an improved penetration sealant which overcomes one or more disadvantages of the prior art.

WO94/11455 describes a sealant comprising a silicone resin, a filler, a ceramic fire retardant, a smoke suppressant and either aluminium hydroxide or magnesium hydroxide.

According to a first aspect of the present invention there is provided a method of sealing a service penetration in a structure, the method comprising applying a sealant composition around the service penetration on an exterior surface of the structure, wherein the penetration sealant composition comprises: from 5 to 40 wt% of a filler; from 20 to 80 wt% of a silicone polymer; and from 10 to 60 wt% of fire retardant compound.

The structure may be a wall, floor or ceiling of a building. Preferably it is a wall. These structures act as a fire barrier and are often given a fire resistance rating. If there is a hole in the structure the fire resistance rating drops significantly.

When a service, such as a gas or water pipe, or an electrical cable or telephone wire needs to be fitted through the structure, a hole in the structure must be made. This hole is referred to as a service penetration.

In the method of the present invention a sealant composition is applied around the service penetration on an exterior surface of the structure.

By around the service penetration we mean enclosing the penetration around its edge, i.e. around the hole in the structure.

A particular advantage of the present invention is that the sealant composition is applied on an exterior surface of the structure.

By exterior surface we mean that the surface is on the outer face and not within the structure. This does not necessarily mean that the surface is the outside of a building, open to the air. The exterior surface is suitably ordinarily visible. The present invention differs from the prior art wherein a sealant is applied to the interior of the structure within the hole. In the present invention the sealant composition is not positioned within the hole that passes through the interior of the structure through which the service is delivered.

The penetration sealant composition used in the method of the present invention comprises from 5 to 40 wt% of a filler.

Any suitable filler may be used. Examples of suitable fillers include carbonates, oxides and barites.

Mixtures of fillers may be used.

Preferred fillers are carbonate compounds.

When a mixture of fillers is present, the above amounts refer to the total amount of all fillers present in the composition.

Especially preferred fillers are carbonate compounds, especially alkaline earth metal carbonate. Most preferred are carbonates of magnesium and/or calcium.

In some embodiments the filler comprises calcium carbonate.

In some embodiments the filler comprises magnesium carbonate.

Most preferably the filler comprises dolomite. Dolomite is a mixed carbonate salt comprising both calcium and magnesium ions.

Preferably the sealant composition comprises 10 to 35 wt% filler, more preferably from 10 to 30 wt%, preferably from 10 to 25 wt%, more preferably from 15 to 25 wt%, preferably from 15 to 20 wt%, for example about 18 wt%.

Preferably the sealant composition comprises from 10 to 35 wt% dolomite, more preferably from 10 to 30 wt%, preferably from 10 to 25 wt%, more preferably from 15 to 25 wt%, preferably from 15 to 20 wt%, for example about 18 wt%.

The sealant composition comprises from 20 to 80 wt% of a silicone polymer.

The composition may comprise any suitable silicone polymer.

Preferred silicone polymers for use herein are not cured or cross-linked.

Preferred silicone polymers are polydimethylsiloxane, divinyl polydimethylsiloxane or mixtures thereof.

Suitably the silicone polymer has a weight average molecular weight from 200000 to 800000, more preferably from 250000 to 740000.

In some preferred embodiments the silicone polymer has a weight average molecular weight of more than 550,000, for example more than 560000 or more than 580000.

In some embodiments the silicone polymer has a weight average molecularweight of from 550000 to 700000, suitably from 560000 to 660000.

The silicone polymer is preferably not hydroxy terminated.

Suitably the silicone polymer may be vinyl terminated.

Suitably the density of the silicone polymer is from 0.9 to 1.5 gcm⁻³, preferably from 1.0 to 1.25 gcm⁻³.

Preferably the silicone polymer has dynamic viscosity of greater than 5000000 mPa.s, preferably greater than 7000000 mPa.s, more preferably greater than 9000000 mPa.s.

Suitably the silicone polymer has a Shore A hardness of from 5 to 50, preferably from 10 to 40.

In some preferred embodiments the sealant composition comprises a polydimethylsiloxane polymer which optionally includes vinyl groups.

Preferably the sealant composition comprises a polydimethylsiloxane polymer having a weight average molecular weight of from 560000 to 700000, a viscosity of greater than 9000000 and a Shore A hardness of 10 to 40.

Preferably the sealant composition comprises from 25 to 75 wt% of the silicone polymer, preferably from 25 to 70 wt%. Suitably the composition comprises from 35 to 65 wt% of the silicone polymer, preferably from 30 to 60 wt%, more preferably from 35 to 55 wt%, suitably from 40 to 50 wt% of the silicone polymer. Most preferably the composition comprises from 42 to 48 wt%, for example from 43 to 47 wt% of the silicone polymer.

In embodiments in which the sealant composition comprises a mixture of silicone polymers, the above amounts refer to the total of all silicone polymers present in the composition.

The sealant composition comprises from 10 to 60 wt% of a fire retardant compound.

Any suitable fire retardant compound may be used.

By fire retardant compound we mean to refer to a compound which prevents or inhibits the spread of fire.

Such compounds do not burn. Preferably they char and/or swell.

Suitable fire retardant compounds for use herein include metal hydroxides, exfoliated graphite, metal silicates (e.g. sodium metasilicate), phosphate sources (e.g. ammonium polyphosphate), pentaerythritol, and melamine.

Preferred fire retardant compounds are metal hydroxides, especially magnesium and/or aluminium hydroxide.

Most preferably the fire retardant compound comprises aluminium trihydroxide.

Suitably the fire retardant compound is present in an amount of from 5 to 55 wt%, preferably from 20 to 50 wt%, more preferably 25 to 45 wt%, preferably from 30 to 40 wt%.

Suitably the fire retardant compound is present in an amount of approximately 33 to 38 wt%.

In preferred embodiments the filler, silicone polymer and fire retardant compound together comprise at least 80 wt% of the sealant composition, preferably at least 90 wt%, suitably at least 95 wt%.

The sealant composition used in the method of the present invention may comprise one or more further components.

In some embodiments the sealant composition may include one or more intumescent compounds. Suitable intumescent compounds will be known to the person skilled in the art.

For example the sealant composition may comprise silicate and/or graphite intumescent materials. Other suitable intumescent compounds include ammonium polyphosphate, melamine and pentaerythritol.

Other materials that may be present in the sealant composition using the present invention include pigments and metal oxides.

Metal oxides, for example iron oxide or titanium oxide, provide colour and increase temperature resistance.

In some preferred embodiments the sealant composition further comprises a plasticiser.

The plasticiser is suitably present in an amount of 0.01 to 10 wt%, preferably 0.1 to 5 wt%, suitably from 0.5 to 3 wt%, for example from 1 to 2 wt%.

Any suitable plasticiser may be included. Preferred plasticisers for use herein are non-reactive silicone oils. These are typically clear, colourless and odourless liquids.

Preferred silicone oils have a viscosity of from 50 to 10000 mPa.s, preferably from 100 to 5000 mPa.s, suitably from 250 to 2000 mPa.s, for example from 500 to 1000 mPa.s at 25°C.

One suitable silicone oil plasticiser has a freezing point of -50°C.

One suitable silicone oil plasticiser has an ignition temperature of about 450°C and a flashpoint of greater than 320°C.

In an especially preferred embodiment the sealant composition used in the method of the present invention comprises from 10 to 30 wt% of dolomite, from 30 to 60 wt% of silicone polymer, from 35 to 40 wt% of aluminium trihydroxide, and from 0.5 to 3 wt% of a silicone oil plasticiser.

In preferred embodiments the sealant composition used in the method of the present invention comprises less than 2 wt% borate compounds, preferably less than 1 wt%, more preferably less than 0.1 wt%, suitably less than 0.01 wt%.

Disclosed herein is a penetration sealant composition comprising from 5 to 40 wt% of a filler; from 20 to 80 wt% of a silicone polymer; and from 10 to 60 wt% of fire retardant compound.

Preferred features of the penetration sealant composition are as defined in relation to the first aspect.

The sealant composition used in the present invention has a number of highly advantageous properties.

These properties mean that the composition is especially suitably for use in the method of the first aspect in which the sealant composition is applied to the exterior surface of a structure around a service penetration.

The sealant composition is suitably tacky, malleable and easy to handle. It is suitably in the form of a putty or plasticine-like material. It is easy to roll and manipulate and thus can be fitted by hand.

Preferably the sealant composition used in the present invention does not dry. Preferably it does not set or harden. Suitably it does not need to be cured.

The sealant composition used in the present invention offers significant advantages over sealant compositions of the prior art. Because it does not harden or cure, the sealant can be pulled off and replaced. This makes it easier to refit because it is easier to manipulate by hand and if not initially fitted correctly it can be removed and replaced. If a service needs to be frequently inspected or replaced, the same sealant composition can be used.

The sealant composition suitably has sufficient tackiness to adhere to the structure, for example a wall. Suitably it is malleable and self supporting; preferably it can be readily manipulated but holds its position.

The sealant composition is tacky and readily adheres to surface. Suitably the sealant composition of the present invention self-adheres. There is no need for additional fixtures or a fire collar to keep it in place.

The sealant composition is suitably water resistant.

The sealant composition used in the present invention is malleable and deformable.

The composition suitably maintains its malleability over prolonged periods and thus can be be easily adjusted, removed or replaced.

Suitably the sealant composition remains malleable for a period of at least 6 months, preferably at least 12 months, preferably at least 2 years, more preferably at least 10 years.

By using a sealant composition the present invention on an exterior surface of the structure, it is not necessary to make a hole bigger than needed for the service to fit through as there is no need to fit a sealant within the interior surface of the structure, i.e. within the hole. The provision of a smaller hole improves the fire rating of the structure. This also mean less deformity to the structure is required and thus there is reduced weakening of the structure.

The penetration sealant composition of the present invention suitably has a density of from 1 to 2 gcm⁻³, preferably from 1.3 to 1.8 gcm⁻³, more preferably from 1.5 to 1.6 gcm⁻³.

The penetration sealant composition suitably has a consistency of putty.

The penetration sealant composition may be provided in any suitable form. It may be provided in a tub as a mass from which portions can be taken.

In some preferred embodiments it is provided in elongated form. Preferably it is provided as a cord. The cord may be rolled around a support.

Preferably the cord is supplied in a ready-to-use form. Suitably the diameter of the cord is selected to provide sufficient fire resistance for most common applications. Because the composition is malleable and non-setting, multiple portions of cord can be joined together as required, depending on the size of the service penetration.

The provision of a cord means that the composition is easy to handle. It is a simple matter for a portion of the cord to be torn off and manipulated into position around a pipe, wire or other service.

The penetration sealant composition used in the method of the present invention is suitably intumescent.

The penetration sealant composition used in the method of the present invention has fire retardant properties. The fire retardant properties of penetration seals are measured according to European Standard ETAG 026. The penetration sealant composition used in the method of the present invention has met standards for insulation and integrity for all service penetrations tested.

Described herein is the use of a composition comprising from 5 to 40 wt% of a filler; from 20 to 80 wt% of a silicone polymer; and from 10 to 60 wt% of fire retardant compound as an external sealant around a service penetration.

The invention will now be further described with reference to the following non-limiting examples.

### Example 1

Composition A was prepared comprising the following components:
Dolomite - 18 wt%
Aluminium tirhydroxide - 36 wt%
Polydimethylsiloxane (M_{w} approx. 600000) - 44 wt%
Silicone oil - 2 wt%

The composition was tested according to ETAG026 at a third party UKAS accredited fire safety laboratory.

Various services were fitted through a partition according to European standard EN1366. The seal around the service was made by applying composition A on an external surface of each side of the partition and the partition was fitted into a furnace.. Thermocouples readings from the seal, the partition and the service were recorded during the test. The time taken for the fire to penetrate the wall was measured. The intergrity and insulation ratings were recorded and are detailed in the table below for the services specified.

Target El is the time (in minutes) that the product was aiming to reach for integrity (E) and insulation (I) of the seal. The integrity is the time for which the service remains sealed. The insulation is the time taken for the temperature to exceed an average temperature of 140°C above the ambient temperature at the start of the test. This is detailed in EN1363 Part 1.

| Service | Seal description | Service insulation | Target El | Result E (min) | Result El (min) |
|---|---|---|---|---|---|
| Cable bundle F Ø75mm | **Composition** \|**A applied on exterior surface** | | 60 | 121 | 121 |
| Cable D.1 | | | 60 | 126 | 65 |
| Cable D.2 | | | 60 | 126 | 71 |
| Cable D.3 | | | 60 | 69 | 64 |
| 4mm steel pipe C/U minimum size/wt | | | 60 | 126 | 89 |
| 30mm steel pipe C/U max dia min wt | | | 60 | 121 | 121 |
| 6mm copper pipe C/C minimum size/wt | | | 60 | 126 | 126 |
| 12mm copper pipe C/C max dia min wt | | | 60 | 126 | 68 |
| 16mm alupex pipe C/C minimum size/wt | | | 60 | 121 | 121 |
| 20mm alupex pipe C/C max dia min wt | | | 60 | 126 | 101 |
| 40x1.0mm steel pipe C/U (minimum size) | | Full length 20mm stonewool pipesection 80kg/m3 penetrating aperture | 60 | 121 | 121 |
| 324x4.5mm steel pipe C/U (minimum wall thickness) | | Full length 30mm stonewool pipesection 80kg/m3 penetrating aperture | 60 | 121 | 86 |
| 324x4.5mm steel pipe C/U (minimum wall thickness) | | Full length 80mm stonewool pipesection 80kg/m3 penetrating aperture | 60 | 120 | 108 |
| 40x1.0mm steel pipe C/U (minimum size) | | Interrupted 20mm x 50cm stonewool pipesection 80kg/m3 against fireseal | 60 | 121 | 121 |
| 324x4.5mm steel pipe C/U (minimum wall thickness) | | Interrupted 30mm x 50cm stonewool pipesection 80kg/m3 against fireseal | 60 | 121 | 121 |
| 12x1.0mm copper pipe C/C minimum size/wt | | Full length 20mm stonewool pipesection 80kg/m3 penetrating aperture | 60 | 102 | 79 |
| 54x1.5mm copper pipe C/C max dia min wt | | Full length 30mm stonewool pipesection 80kg/m3 penetrating aperture | 60 | 121 | 87 |
| 54x1.5mm copper pipe C/C max dia min wt | | Full length 80mm stonewool pipesection 80kg/m3 penetrating aperture | 60 | 94 | 90 |
| 12x1.0mm copper pipe C/C minimum size/wt | | Interrupted 20mm x 50cm stonewool pipesection 80kg/m3 against fireseal | 60 | 102 | 76 |
| 54x1.5mm copper pipe C/C max dia min wt | | Interrupted 20mm x 50cm stonewool pipesection 80kg/m3 against fireseal | 60 | 102 | 76 |

## Claims

1. A method of sealing a service penetration in a structure, the method comprising applying a sealant composition around the service penetration on an exterior surface of the structure, wherein the penetration sealant composition comprises: from 5 to 40 wt% of a filler; from 20 to 80 wt% of a silicone polymer; and from 10 to 60 wt% of fire retardant compound.

2. A method according to claim 1 wherein the filler combines dolomite.

3. A method according to claim 1 or claim 2 wherein the silicone polymer has a weight average molecular weight of from 200000 to 800000.

4. A method according to any preceding claim wherein the silicone polymer has dynamic viscosity of greater than 9000000 mPa.s.

5. A method according to any preceding claim wherein the silicone polymer is selected from polydimethylsiloxane, divinyl polydimethylsiloxane or mixtures thereof.

6. A method according to any preceding claim wherein the fire retardant compound comprises aluminium trihydroxide.

7. A method according to any preceding claim wherein the penetration sealant composition comprises from 10 to 30 wt% of dolomite, from 30 to 60 wt% of silicone polymer, from 35 to 40 wt% of aluminium trihydroxide, and from 0.5 to 3 wt% of plasticiser silicone oil.

## Patentansprüche

1. Verfahren zum Abdichten einer Servicepenetration in einer Struktur, wobei das Verfahren Aufbringen einer Dichtstoffzusammensetzung um die Servicepenetration auf eine Außenfläche der Struktur umfasst, wobei die Penetrationsdichtstoffzusammensetzung umfasst: von 5 bis 40 Gew.-% an einem Füllstoff; von 20 bis 80 Gew.-% an einem Siliconpolymer; und von 10 bis 60 Gew.-% an flammhemmender Verbindung.

2. Verfahren nach Anspruch 1, wobei der Füllstoff Dolomit kombiniert.

3. Verfahren nach Anspruch 1 oder Anspruch 2, wobei das Siliconpolymer ein gewichtsgemitteltes Molekulargewicht von 200000 bis 800000 aufweist.

4. Verfahren nach einem der vorstehenden Ansprüche, wobei das Siliconpolymer eine dynamische Viskosität von größer als 9000000 mPa.s aufweist.

5. Verfahren nach einem der vorstehenden Ansprüche, wobei das Siliconpolymer ausgewählt ist aus Polydimethylsiloxan, Divinylpolydimethylsiloxan und Gemischen davon.

6. Verfahren nach einem der vorstehenden Ansprüche, wobei die flammhemmende Verbindung Aluminiumtrihydroxid umfasst.

7. Verfahren nach einem der vorstehenden Ansprüche, wobei die Penetrationsdichtstoffzusammensetzung von 10 bis 30 Gew.-% Dolomit, von 30 bis 60 Gew.-% Siliconpolymer, von 35 bis 40 Gew.-% Aluminiumtrihydroxid und von 0,5 bis 3 Gew.-% Weichmacher-Siliconöl umfasst.

## Revendications

1. Procédé de scellement d'une pénétration de service dans une structure, le procédé comprenant l'application d'une composition d'agent de scellement autour de la pénétration de service sur une surface extérieure de la structure, dans lequel la composition d'agent de scellement de pénétration comprend : de 5 à 40 % en poids d'une charge ; de 20 à 80 % en poids d'un polymère de silicone ; et de 10 à 60 % en poids d'un composé ignifugeant.

2. Procédé selon la revendication 1, la charge comprenant de la dolomite.

3. Procédé selon la revendication 1 ou la revendication 2, le polymère de silicone ayant un poids moléculaire moyen en poids allant de 200 000 à 800 000.

4. Procédé selon une quelconque revendication précédente, le polymère de silicone ayant une viscosité dynamique supérieure à 9 000 000 mPa.s.

5. Procédé selon une quelconque revendication précédente, dans lequel le polymère de silicone est choisi parmi un polydiméthylsiloxane, un divinyl-polydiméthylsiloxane ou des mélanges correspondants.

6. Procédé selon une quelconque revendication précédente, dans lequel le composé ignifugeant comprend du trihydroxyde d'aluminium.

7. Procédé selon une quelconque revendication précédente, dans lequel la composition d'agent de scellement de pénétration comprend de 10 à 30 % en poids de dolomite, de 30 à 60 % en poids de polymère de silicone, de 35 à 40 % en poids de trihydroxyde d'aluminium, et de 0,5 à 3 % en poids d'une huile de silicone plastifiante.
